# EUROPÄISCHE PATENTSCHRIFT

(11) **EP 0 554 416 B1**
(45) Veröffentlichungstag und Bekanntmachung des Hinweises auf die Patenterteilung: **18.12.1996**
(21) Anmeldenummer: 92914668.6
(22) Anmeldetag: 23.07.1992
(51) Int. Cl.: F16L 55/165, F16L 55/18

(54) **VORRICHTUNG UND VERFAHREN ZUR SANIERUNG VON HAUSANSCHLUSSLEITUNGEN AN NICHT BEGEHBAREN ABWASSERSAMMELLEITUNGEN**
PROCESS AND DEVICE FOR RELINING SERVICE DRAINS JOINED TO INACCESSIBLE MAIN SEWAGE DRAINS
PROCEDE ET DISPOSITIF DE RENOVATION DE CANALISATIONS D'IMMEUBLE RACCORDEES A DES CONDUITS COLLECTEURS INACCESSIBLES D'EAUX D'EGOUTS

(30) Priorität: 27.08.1991 CH 2507/91
(43) Veröffentlichungstag der Anmeldung: 11.08.1993
(73) Patentinhaber: Sika Equipment AG, 8967 Widen (CH)
(72) Erfinder: Sigel, Alwin, CH-8418 Schlatt (CH)
(74) Vertreter: Schwabe, Hans-Georg, Dipl.-Ing.
(86) Internationale Anmeldenummer: CH9200152
(87) Internationale Veröffentlichungsnummer: WO9304313

(56) Entgegenhaltungen:
- WO-A-86/03818
- DE-A- 3 603 597
- DE-A- 3 730 315
- DE-A- 3 803 274
- GB-A- 2 213 230
- GB-A- 2 218 490
- US-A- 3 160 425

## Beschreibung

Die vorliegende Erfindung betrifft ein Verfahren gemäß dem Oberbegriff des Patentanspruchs 1 und eine Vorrichtung gemäß dem Oberbegriff des Patentanspruchs 6.

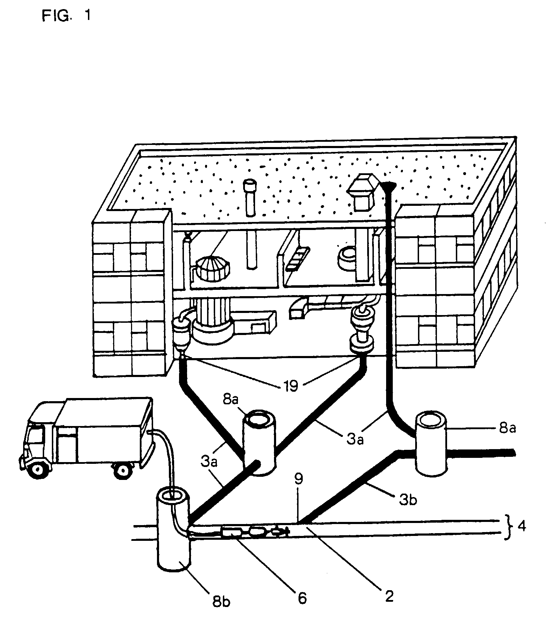

Leitungen, die Abwässer aus Gebäuden ableiten, münden entweder direkt in die Sammelleitung 4 (vgl. Fig. 1), welche sich unter einer an den Gebäuden vorbeiführenden Strasse befindet, oder führen zuerst zu einem Sammelschacht 8a, der durch eine Leitung mit der Sammelleitung 4 verbunden ist. Die zur Sammelleitung 4 führenden Leitungen können entweder direkt in das Rohr der Sammelleitung 4 einmünden oder aber in einen Sammelschacht 8b der Sammelleitung 4. Leitungen, die von den Gebäuden direkt oder indirekt zur Sammelleitung 4 führen, nennt man Bausanschlussleitungen. Sowohl diese Bausanschlussleitungen 3a, 3b als auch die Sammelleitungen 4 haben meistens einen zu kleinen Durchmesser, um eine Begehung zu ermöglichen. Damit bei einer Reparatur das Leitungsnetz nicht ausgegraben werden muss und dadurch die Strasse nicht gesperrt werden muss, sucht man nach Reparaturmöglichkeiten, die ohne Ausgrabung der Leitungen realisierbar sind, wie z.B. mit ferngesteuerten Robotern. Solche Maschinen werden schon seit längerer Zeit mit Erfolg vor allem in den Sammelleitungen 4, welche einen grösseren Durchmesser aufweisen, eingesetzt. Zur Behebung von Schäden in den Bausanschlussleitungen 3a, 3b sind die handelsüblichen Roboter normalerweise zu gross. Hier müssen andere Verfahren und Vorrichtungen eingesetzt werden.

Eines der bekannten Verfahren arbeitet mit dünnwandigen, weichen, verformbaren Rohren aus selbsthärtendem Dichtungsmaterial, sogenannten Inlinern. Solche Inliner können beispielsweise aus Filz oder Filz-Glasfasern-Gemischen hergestellt sein, welche mit Epoxyharzen durchtränkt worden sind. Im Hohlraum dieses verformbaren Rohres verläuft ein aufblasbarer, aus gummiartigem Material bestehender Schlauch. Bei diesem Verfahren wird in einem ersten Schritt vom Abfluss im Gebäude 19 aus eine dünne Schnur durch die Bausanschlussleitung 3a bis zu einem Sammelschacht 8a geschwemmt. Kann die Schnur im Sammelschacht 8a ergriffen werden, so wird am anderen Schnurende, das sich noch im Gebäude befindet, ein dickeres Seil angeknüpft und dieses mit Hilfe der dünneren Schnur durch die Bausanschlussleitung 3a bis zum Sammelschacht 8a gezogen. Am oberen Seilende im Gebäude wird dann das weiche, verformbare Rohr, der sogenannte Inliner, befestigt, indem das vorangehende Ende des Inliners zusammengeschnürt wird, so dass es einen sich nach vorne verschmälernden Zipfel bildet. Anschliessend wird der Inliner am Seil durch die Hausanschlussleitung 3a bis zum Sammelschacht 8a gezogen. Der Schlauch im Innern des Inliners wird nun aufgeblasen. Das weiche, verformbare Rohr vergrössert sich dadurch, wird gegen die alte, defekte Rohrwand gepresst und schmiegt sich einwandfrei an diese an. Der Schlauch bleibt während etwa zwölf Stunden, z.B. über Nacht, aufgeblasen. Während dieser Zeit härtet das Dichtungsmaterial in Form des weichen Rohres oder Inliners aus. Nach dem Aushärten kann das Pressluftgerät, welches den Gummischlauch aufblies, abgeschaltet werden. Das ursprünglich weiche Rohr ist nun ausgehärtet und weist eine einwandfreie Undurchlässigkeit und Festigkeit auf. Der in den Sammelschacht 8a hineinragende Zipfel des Inliners wird schliesslich möglichst bündig zur Schachtwand abgeschnitten und der erschlaffte Gummischlauch aus der sanierten Hausanschlussleitung 3a hinausgezogen.

Das oben beschriebene Relining-Verfahren eignet sich zwar ausgezeichnet für die Sanierung von Leitungen 3a wie im oben beschriebenen Fall zwischen dem Abfluss 19 im Gebäude und einem Sammelschacht 8a oder für die Sanierung von Leitungen 3a, welche zwei Sammelschächte 8a, 8b miteinander verbinden; es eignet sich aber nicht für die Sanierung von Leitungen 3b, welche direkt in das Rohr der Sammelleitung 4 einmünden. Der Grund dafür ist folgender: Da sowohl die Hausanschlussleitung 3b als auch die Sammelleitung 4 unbegehbar sind, muss das Seil, an dem der Inliner befestigt wird, durch die Bausanschlussleitung 3b bis zur Einmündung in die Sammelleitung 4 und von dort durch die Sammelleitung 4 bis zum nächsten Sammelschacht 8b gezogen werden. Erst beim Sammelschacht 8b kann das Seilende dann ergriffen werden. Das bedeutet aber, dass das Seil über die Kante 9 der Einmündung 2 der Hausanschlussleitung 3b gezogen werden muss. Zieht man das Seil nun vom Sammelachacht 8b aus, so gleitet es über diese scharfe Kante 9 und wird durch diese verletzt, so dass es reisst oder aus Reibungsgründen einfach nicht mehr über diese Kante 9 hinweggezogen werden kann.

Aus der DE-A-38 03 274 ist eine Vorrichtung zur Fernsehuntersuchung von Rohrleitungen bekannt, bei der eine Fernsehkamera auf einem auf Rollen verfahrbaren Wagen in eine Rohrleitung hineingefahren werden kann. Diese Vorrichtung weist um eine Achse schwenkbare Führungsmittel auf, um die herum die Fernsehkamera geschwenkt werden kann, beispielsweise um Hausanschlüsse zu untersuchen.

Aus der gattungsgemäßen GB-A-2 218 490 sind ein Verfahren und eine Vorrichtung zur Abdichtung u.a. auch von Hausanschlüssen bekannt. Dabei wird unter anderem eine Vorrichtung von einem Hausanschluß aus bzw. einem Wartungsschacht am Hausanschluß aus über die Hausleitung bis an die Sammelleitung bewegt. Diese Vorrichtung weist Klemmhalterungen auf, mit denen die Vorrichtung an der Einmündung der Hausleitung in die Sammelleitung festgelegt werden kann. Über eine in dieser Vorrichtung befindliche Seilführungsvorrichtung kann anschließend ein Inliner in den Hausanschluß eingezogen werden. Bei dieser Art der Vorrichtung bzw. dieser Art des Verfahrens ist jedoch ein Zugang über den Hausanschluß zu schaffen, was in der Regel Probleme bereitet. Die Vorrichtung nach der gattungsgemäßen Druckschrift kann nicht über die Sammelleitung zugeführt werden.

Gemäss dem Stand der Technik gibt es keine geeigneten Verfahren und Vorrichtungen, mit welchen Bausanschlussleitungen 3b, die direkt in das Rohr einer Sammelleitung 4 münden, saniert werden können. Bisher mussten solche Bausanschlussleitungen 3b für die Sanierung ausgegraben werden, was sehr kostspielig war.

Die Erfindung stellt sich nun die Aufgabe, eine Vorrichtung und ein Verfahren zu finden, mit deren Hilfe Bausanschlussleitungen 3b, die direkt in das Rohr einer Sammelleitung 4 münden, einfach, kostengünstig und umweltfreundlich saniert werden können.

Die Aufgabe wird erfindungsgemäss mit Hilfe der Ausbildungsmerkmale nach den Patentansprüchen 1 und 6 gelöst.

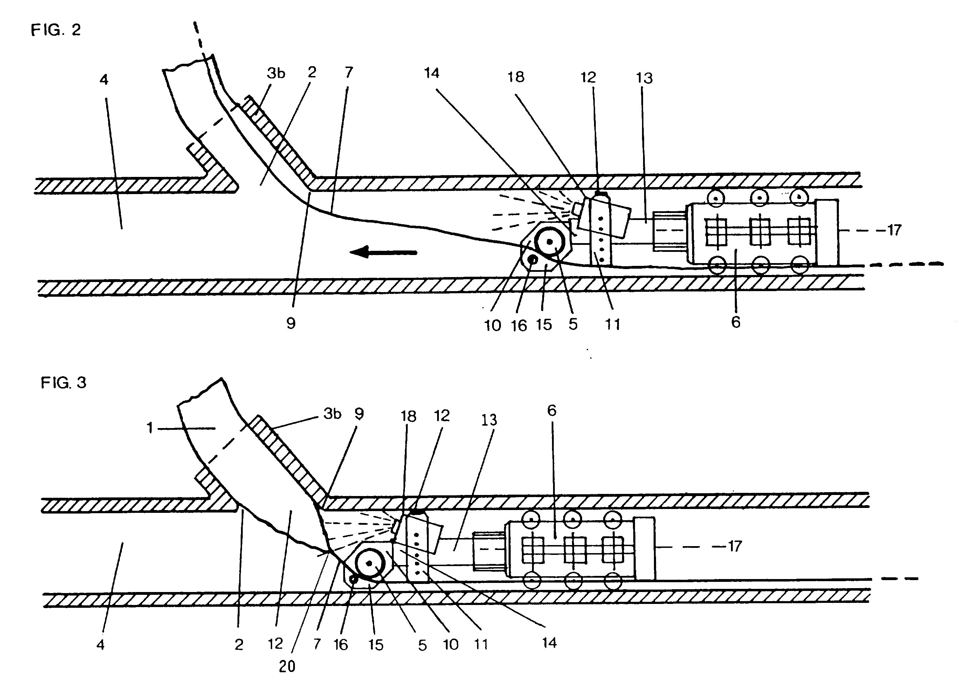

Beim Verfahren, welches Gegenstand dieser Erfindung ist, wird das Seil 7 (Fig. 2 und 3), an dem der Inliner 1 befestigt ist, bei der Einmündung 2 der Bausanschlussleitung 3b in die Sammelleitung 4 mittels einer Umlenkrolle 5, die an einer ferngesteuerten Sanierungsmaschine 6 befestigt ist, in der Art und Weise geführt, dass es die dem Sammelschacht 8b zugewandte Kante 9 der Bausanschlussleitung 3b nicht berührt. Es zeigen:
- Fig. 1: Schematische Darstellung eines Leitungsnetzes mit verschiedenen möglichen Anordnungen von Sammelschächten 8a, 8b, Bauszuleitungen 3a, 3b und einer Sammelleitung 4
- Fig. 2: Seitenansicht einer aufgeschnittenen Sammelleitung 4, in der sich eine ferngesteuerte Sanierungsmaschine 6 befindet, die sich der Bauszuleitungsmündung 2 nähert und deren Umlenkrolle 5 ein Inliner-Seil 7 führt
- Fig. 3: Seitenansicht einer aufgeschnittenen Sammelleitung 4, in der eine ferngesteuerte, mit einer Umlenkrolle 5 ausgerüstete Sanierungsmaschine 6 bei der Einmündung 2 der Hauszuleitung 3b in der Art und Weise positioniert ist, dass das Inliner-Seil 7 die Kante 9 der Hauszuleitung 3b nicht berührt

Bei der Maschine 6, die für die Durchführung des vorgeschlagenen Verfahrens eingesetzt wird, handelt es sich um eine ferngesteuerte Sanierungsmaschine von der Art, wie sie bisher für Leitungssanierungen eingesetzt wurde, die aber mit zusätzlichen, für das Verfahren notwendigen Vorrichtungen ausgerüstet ist. Die zusätzlichen Vorrichtungen bestehen einerseits aus einer Seilführungsvorrichtung 10, die am Kopf 14 der Sanierungsmaschine 6 angebracht ist, andererseits aus einem Stützfuss 11, welcher an einer zylindrischen Welle 13, die den Kopf 14 trägt, befestigt ist. Die Seilführungsvorrichtung 10 besteht aus einem Rollenhalter 15, der mit einer Umlenkrolle 5 und einer Sicherungsrolle 16 ausgerüstet ist. Die Drehachsen der Umlenkrolle 5 und der Sicherungsrolle 16 sind in der Art und Weise am Rollenhalter 15 befestigt, dass sie senkrecht auf der Längsachse 17 der Sanierungsmaschine 6 stehen. Der Stützfuss 11 ist an der zylindrischen Welle 13 in der Art und Weise beweglich befestigt, dass er senkrecht auf der Längsachse 17 der Sanierungsmaschine 6 steht und entsprechend dem Durchmesser der Sammelleitung 4 radial nach aussen und innen vorgeschoben bzw. zurückgeschoben werden kann. Es lässt sich in verschiedenen Vorschubpositionen arretieren. An seiner äusseren Stirnseite trägt er einen Bremsklotz 12. Die Sanierungsmaschine 6 ist ausserdem mit einer Videokamera 18 ausgerüstet, die ebenfalls an der Welle 13 befestigt ist, und deren Sichtfeld nach vorne gerichtet ist, so dass die Position der Umlenkrolle 5 bezüglich der Mündung 2 der Bausanschlussleitung 3b erfasst werden kann.

Es ist vorgesehen, dass die Welle 13 motorisch um ihre Längsachse gedreht werden kann.

Die Durchführung des erfindungsgemässen Verfahrens läuft folgendermassen ab:

In einem ersten Schritt muss die Mündung 2 der Bausanschlussleitung 3b vorbereitet werden. Oft (besonders bei alten Hausanschlussleitungen 3b) ragen die Ränder der einmündenden Röhre in den Hohlraum der Sammelleitung 4 hinein. Diese Ränder werden mit Bilfe eines Sanierungsfahrzeuges, das mit einer Trennscheibe ausgerüstet ist, abgefräst. Trotz dieser Vorbehandlung bleiben die Kanten der Röhre aber immer noch so rauh und scharf, dass sie das Seil 7, an dem der Inliner 1 befestigt ist, beschädigen können.

Anschliessend wird eine Schnur durch die Bausanschlussleitung 3b bis zur Mündung 2 in die Sammelleitung 4 und von dort aus durch die Sammelleitung 4 bis zum nächsten Sammelschacht 8b geschwemmt.

Darauf wird mit Hilfe der durchgeschwemmten Schnur ein Seil 7 durch die Bausanschlussleitung 3b und die Sammelleitung 4 bis zum Sammelschacht 8b der Sammelleitung 4 hindurchgezogen. Am Seilende, das sich im Gebäude bzw. im der Sammelleitung 4 vorgelagerten Sammelschacht 8a befindet, wird das Seil des Inliners 1 befestigt.

Beim Sammelschacht 8b der Sammelleitung 4 wird eine Sanierungsmaschine 6, die obiger Beschreibung entspricht, in die Sammelleitung 4 gebracht und das durchgeschwemmte Seil 7 zwischen der Umlenkrolle 5 und der Sicherungsrolle 16 eingefädelt. Die Sicherungsrolle 16 verhindert, dass das Seil 7 aus der Seilführungsvorrichtung 10 hinausrutscht.

Nach diesen Vorbereitungen wird die Sanierungsmaschine 6 vorwärts in die Richtung der Bausanschlussleitungsmündung 2 bewegt. Die Seilführungsvorrichtung 10 gleitet dabei dem Seil 7 entlang. Mit der Videokamera 18, deren Signale über Versorgungsleitungen zum Sammelschacht 8b geleitet werden, kann man sehen, wenn die Umlenkrolle 5 die richtige Position längs der Sammelleitung 4 erreicht hat, bei welcher das Seil 7 in gestrecktem Zustand berührungsfrei an der Kante 9 der Hausanschlussleitung 3b, welche dem Sammelschacht 8b der Sammelleitung 4 zugewandt ist, vorbeigeführt wird.

Ist diese Position erreicht, kann die Neigung der Umlenkrolle 5 durch Drehung der Welle 13 optimal eingestellt werden. Danach wird die Vorschubposition des Stützfusses 11 an den Durchmesser der Sammelleitung 4 angepasst. Anschliessend beginnt man, das Seil 7 vom Sammelschacht 8b der Sammelleitung 4 aus einzuziehen. Der noch weiche Inliner 1 wird dadurch durch die Bausanschlussleitung 3b in Richtung Sammelleitung 4 gezogen. Durch den Zug, den man auf das Seil 7 ausübt, wird die Seilführungsvorrichtung 10 und damit die ganze Sanierungsmaschine 6 gegen die Wand der Sammelleitung 4 gedrückt. Der Stützfuss 11 mit Bremsklotz 12 verhindern nun, dass die Sanierungsmaschine 6 dadurch verschoben wird. Der Bremsklotz 12 wird gegen die Rohrwand gedrückt und verhindert ein eventuelles Rutschen der Sanierungsmaschine 6.

Der Inliner 1 wird soweit in Richtung Sammelleitung 4 gezogen, bis sein vorderer Zipfel 20 in die Sammelleitung 4 hineinragt. Die Sanierungsmaschine 6 kann dann aus der Sammelleitung 4 in den Sammelschacht 8b zurückgefahren und das Seil 7 wieder aus der Seilführungsvorrichtung 10 gelöst werden. Anschliessend wird der Gummischlauch im Innern des Inliners 1 mittels einer Pumpe oder eines Pressluftgerätes, das sich im Gebäude oder in dem der Sammelleitung 4 vorgelagerten Sammelschacht 8a befindet, aufgepumpt, wodurch der Inliner 1 an die Wand der Hausanschlussleitung 3b gepresst wird. Den Gummischlauch lässt man etwa zwölf Stunden, z.B. über Nacht, unter Druck. Während dieser Zeit härtet der Inliner 1 aus.

Nach dem Aushärten wird der Druck im Schlauch abgelassen. Der Zipfel 20 des Inliners 1 wird mit Hilfe der Sanierungsmaschine, die inzwischen mit einer Trennscheibe ausgerüstet wurde, abgefräst und mit dem Seil 7 aus der Sammelleitung 4 herausgezogen. Das Seil und den erschlafften Gummischlauch im Inliner 1 kann man darauf ebenfalls aus der Bausanschlussleitung 3b hinausziehen.

Dank des neuen Verfahrens und der neuen Vorrichtung können nun auch Hausanschlussleitungen 3b, die vom Abfluss 19 im Gebäude oder von einem Sammelschacht 8a, welcher der Sammelleitung 4 vorgelagert ist, direkt zur Sammelleitung 4 führen, mit Hilfe von Inlinern 1 saniert werden. Das war bislang nicht möglich. Das Relining-Verfahren mit Hilfe von Inlinern 1 ist bei Hausanschlussleitungen 3b eine schnelle, kostengünstige und umweltfreundliche Methode. Sehr oft führen die beschädigten Hausanschlussleitungen 3b zu Privathäusern. Der Hauseigentümer muss in diesem Falle die Sanierungskosten selber bezahlen und ist deshalb an einem kostengünstigen Verfahren interessiert. Im weiteren kann während des Aushärtens des Inliners 1 die Sanierungsmaschine 6 aus dem Sammelschacht 8b herausgenommen und dieser zugedeckt werden, so dass der Verkehr während dieser Zeit nicht mehr behindert wird.

Das neue Verfahren und die neue Vorrichtung, welche nun in allen Fällen die Verwendung von Inlinern 1 ermöglicht, wird wegen den oben genannten Vorteilen auf grosses Interesse stossen.

## Patentansprüche

1. Verfahren zum Sanieren von Hausanschlußleitungen (3b), die in eine Abwasser-Sammelleitung (4) einmünden, unter Anwendung eines Relining-Verfahrens, bei dem ein Inliner (1) aus Dichtungsmaterial mittels eines Seiles (7) in die Hausanschlußleitung (3b) eingezogen wird, wobei eine Sanierungsmaschine (6) eingesetzt wird,
**gekennzeichnet** durch die folgenden Arbeitsschritte:
a) Einsetzen der Sanierungsmaschine in Form eines Rohrmolches in die Sammelleitung (4);
b) Einfädeln des Seiles (7) an einer Seilführungsvorrichtung (10) an der Sanierungsmaschine (7);
c) Positionieren der Sanierungsmaschine (6) an der Einmündung (2) der Hausanschlußleitung (3b) in die Sammelleitung (4) von der Sammelleitung aus; und
d) Einziehen des Seiles (7) zusammen mit dem Inliner (1) unter Abstützung an der Sanierungsmaschine (6).

2. Verfahren nach Anspruch 1, dadurch gekennzeichnet, daß die Sanierungsmaschine (6) so positioniert wird, daß das Seil (7) beim Einziehen des Inliners (1) berührungsfrei an der Einmündung (2) vorbeigeführt wird.

3. Verfahren nach Anspruch 1 oder 2, dadurch gekennzeichnet, daß das Positionieren der Sanierungsmaschine (6) durch eine Videokamera (18) an der Sanierungsmaschine (6) überwacht wird.

4. Verfahren nach einem der Ansprüche 1 bis 3, dadurch gekennzeichnet, daß vor dem Einziehen des Seiles (7) gegebenenfalls überstehende Ränder (9) der Hausanschlußleitung (3b) an der Einmündung (2) mittels der Sanierungsmaschine (6) abgefräst werden.

5. Verfahren nach einem der Ansprüche 1 bis 4, dadurch gekennzeichnet, daß nach dem Aushärten des Inliners (1) das überstehende Ende (20) an der Einmündung (2) mittels der Sanierungsmaschine (6) abgefräst wird.

6. Vorrichtung zum Sanieren von Hausanschlußleitungen, die in eine Abwasser-Sammelleitung (4) einmünden, unter Verwendung einer in die Sammelleitung (4) einsetzbaren Sanierungsmaschine (6), wobei die Sanierungsmaschine (6) an ihrem Kopfbereich (14) eine Seilführungsvorrichtung (10) zur Führung eines Seiles (7) aufweist, an dem ein Inliner für ein Hausanschlußrohr befestigt ist, dadurch **gekennzeichnet**, daß an der in Form eines Rohrmolches ausgebildeten Sanierungsmachine (6) ein Stützfuß (11) mit einem der Innenwandung der Sammelleitung (4) gegenüberliegenden Bremsklotz (12) befestigt ist, mit dem die Sanierungsmaschine in der Sammelleitung abstützbar ist.

7. Vorrichtung nach Anspruch 6, dadurch **gekennzeichnet,** daß die Seilführungsvorrichtung (10) eine Umlenkrolle (5) aufweist, die mit einem Rollenhalter (15) am vorderen Ende einer aus der Sanierungsmaschine (6) überstehenden Welle (13) angeordnet ist.

8. Vorrichtung nach Anspruch 6 oder 7, dadurch **gekennzeichnet,** daß der Stützfuß (11) mit dem Bremsklotz (12) auf den Rohrdurchmesser der Sammelleitung (4) einstellbar ist.

9. Vorrichtung nach einem der Ansprüche 6 bis 8, dadurch **gekennzeichnet,** daß am Kopfbereich (14) der Sanierungsmaschine eine Videokamera (18) befestigt ist.

10. Vorrichtung nach einem der Ansprüche 6 bis 9, dadurch **gekennzeichnet,** daß die Sanierungsmaschine (6) ferngesteuert ist.

11. Vorrichtung nach einem der Ansprüche 7 bis 10, dadurch **gekennzeichnet,** daß an der Seilführungsvorrichtung (10) eine Sicherungsrolle (16) der Umlenkrolle (5) gegenüberliegend angeordnet ist.

12. Vorrichtung nach einem der Ansprüche 7 bis 11, dadurch **gekennzeichnet,** daß die Welle (13) um die Längsachse (17) der Sanierungsmaschine (16) verdrehbar ist.

## Claims

1. Process for repairing building branch lines (3b) emptying into a sewer mains (4) employing a relining method in which an inliner (1) made of sealant is pulled into the building branch line (3b) via a rope (7), in the process of which a pipe repairing machine (6) is employed, said process being **characterized** by the following steps:
a) insertion of the pipe repairing machine (6), which is in the form of a pipe scraper, into the sewer mains (4);
b) threading a rope (7) in a rope guiding device (10) on the pipe repairing machine (7);
c) positioning the pipe repairing machine (6) at the junction (2) of the building branch line (3b) leading into the sewer mains (4), positioning being performed from the sewer mains; and
d) pulling a rope (7) along with the inliner (1) into the building branch line with the support of the pipe repairing machine (6).

2. Process according to Claim 1, characterized by the pipe repairing machine (6) being positioned in such a manner that the rope (7) is guided past the junction (2) without coming into contact with it while the inliner (1) is being pulled into the building branch line.

3. Process according to Claim 1 or 2, characterized by the positioning operation of the pipe repairing machine (6) being monitored by a video camera (18) mounted to the pipe repairing machine (6).

4. Process according to one of the Claims 1 to 3, characterized by projecting edges (9), if present, of the building branch line (3b), being milled off at the junction (2) using the pipe repairing machine (6), prior to the rope (7) being pulled through the building branch line.

5. Process according to one of the Claims 1 to 4, characterized by the projecting end (20) of the inliner (1) being milled off at the junction (2) via the pipe repairing machine (6), subsequent to said inliner (1) hardening/curing.

6. Device for repairing building branch lines emptying into a sewer mains (4) employing a pipe repairing machine (6) capable of being inserted in the sewer mains (4), the pipe repairing machine (6) featuring a rope guiding device (10) at its front end (14) for guiding the rope (7) to which an inliner for a building branch line is secured, said device being **characterized** by a support foot (11) being mounted to the pipe repairing machine (6) (said pipe repairing machine being in the form of a pipe scraper), said support foot featuring a brake block (12) facing the inner wall of the sewer mains (4) and said support foot being used to brace the pipe repairing machine inside the sewer mains.

7. Device according to Claim 6, characterized by the rope guiding device (10) featuring a deflection pulley (5) which is located along with a roller mount (15) at the front end of a shaft (13) projecting from the pipe repairing machine (6).

8. Device according to Claim 6 or 7, characterized by the support foot (11) being capable of being adjusted in accordance with the diameter of the sewer mains (4) by means of the brake block (12).

9. Device according to one of the Claims 6 to 8, characterized by a video camera (18) being mounted at the front end (14) of the pipe repairing machine.

10. Device according to one of the Claims 6 to 9, characterized by the pipe repairing machine (6) being remote-controlled.

11. Device according to one of the Claims 7 to 10, characterized by the deflection pulley (5) of the rope guiding device (10) featuring an opposing retaining roller (16).

12. Device according to one of the Claims 7 to 11, characterized by the shaft (13) being capable of being rotated about the lengthwise axis (17) of the pipe repairing machine (16).

## Revendications

1. Procédé pour l'assainissement des conduites de raccord de bâtiment (3b), qui débouchent dans une conduite collectrice des eaux usées (4), avec l'application d'un procédé de relining, dans lequel un inliner (1) en matériau étanche est introduit à l'aide d'une corde (7) dans la conduite de raccord de bâtiment (3b), en utilisant une machine d'assainissement (6), caractérisé par les étapes de travaux suivantes:
a. Mise en place de la machine d'assainissement (6) dans la conduite collectrice (4) ayant une forme de bouchon de conduite;
b. Enfiler la corde (7) dans un système de conduite de corde (10) de la machine d'assainissement (7);
c. Positionnement de la machine d'assainissement (6) au débouchement (2) de la conduite de raccord du bâtiment (3b) dans la conduite collectrice (4) en partant de la conduite collectrice; et
d. Enfiler la corde (7) avec l'inliner (1) avec support de la machine d'assainissement (6).

2. Procédé selon la revendication 1, caractérisé par le fait que la machine d'assainissement (6) est positionnée d'une façon telle, que la corde (7) ne touche pas le débouchement (2) lors du procédé d'enfilement.

3. Procédé selon la revendication 1 ou 2, caractérisé par le fait que la position de la machine d'assainissement (6) est surveillée par une caméra vidéo (18) fixée sur la machine d'assainissement (6).

4. Procédé selon une des revendications 1 à 3, caractérisé par le fait que la machine d'assainissement (6) enlève les bords surélevés (9) de la conduite de raccord du bâtiment (3b) au débouchement (2) en les fraisant avant d'enfilement de la corde (7).

5. Procédé selon une des revendications 1 à 4, caractérisé par le fait que la machine d'assainissement (6) enlève par fraisage le bout de l'inliner (1) dépassant (20) dans le débouchement (2) après son endurcissement.

6. Dispositif pour l'assainissement de conduites de raccord de bâtiment qui débouchent dans une conduite collectrice (4) des eaux usées avec utilisation d'une machine d'assainissement (6) engageable dans la conduite collectrice (4), la machine d'assainissement (6) possédant à son bout (entête, 14) un système de conduite de corde (10) permettant de conduire une corde (7) à laquelle est fixée un inliner (1) pour une conduite de raccord de bâtiment, caractérisé par le fait que la machine d'assainissement (6) ainsi développée ayant la forme d'un bouchon de conduite possède un pied de support (11) qui est fixé à un bloc de freinage (12) se trouvant contre la paroi intérieure de la conduite collectrice (4) permettant le support de la machine d'assainissement dans la conduite collectrice.

7. Dispositif selon la revendication 6, caractérisé par le fait que le système de conduite de corde (10) dispose d'une poulie de renvoi (5) avec un support de poulie (15), qui est fixé à la partie avant d'un essieu (13) sortant de la machine d'assainissement (6).

8. Dispositif selon les revendications 6 ou 7, caractérisé par le fait que le pied de support (11) avec le bloc de freinage (12) peuvent être réglés selon le diamètre de le conduite collectrice (4).

9. Dispositif selon les revendications 6 à 8, caractérisé par le fait qu'une caméra vidéo (18) est montée au bout (entête, 14) de la machine d'assainissement.

10. Dispositif selon les revendications 6 à 9, caractérisé par le fait que la machiné d'assainissement (6) est télécommandée.

11. Dispositif selon les revendications 6 à 10, caractérisé par le fait que le système de conduite de corde (10) dispose d'une poulie de sécurité (16) qui est disposée à l'opposé de la poulie de renvoi (5).

12. Dispositif selon les revendications 6 à 11, caractérisé par le fait que l'essieu (13) peut tourner autour de l'axe horizontal (17) de la machine d'assainissement (16).
